# EUROPÄISCHE PATENTSCHRIFT

(11) **EP 1 967 551 B1**
(45) Veröffentlichungstag und Bekanntmachung des Hinweises auf die Patenterteilung: **22.04.2009**
(21) Anmeldenummer: 08151753.4
(22) Anmeldetag: 21.02.2008
(51) Int. Cl.: C08L 83/04, C09J 183/04

(54) **Selbsthaftende Siliconzusammensetzungen für die drucklose Vulkanisation**
Self-adhesive silicone compositions for unpressurized vulcanization
Appareil pour minimiser la contamination de toner dans un élément de formation d'images

(30) Priorität: 07.03.2007 DE 102007011159
(43) Veröffentlichungstag der Anmeldung: 10.09.2008
(73) Patentinhaber: Wacker Chemie AG, 81737 München (DE)
(72) Erfinder: Weidinger, Jürgen, Dr., 84570, Polling-Ehring (DE)
(74) Vertreter: Deffner-Lehner, Maria

(56) Entgegenhaltungen:
- EP-A- 0 628 619
- WO-A-20/04055853
- DE-A1- 19 719 302

## Beschreibung

Die Erfindung betrifft selbsthaftende Siliconzusammensetzungen sowie daraus hergestellte Siliconelastomere und Verbundmaterialien.

Bekanntermaßen ist die Haftung von Siliconelastomeren aufgrund des inerten Charakters der Silicon(Siloxan)-Polymere auf zahlreichen Substraten, wie Kunststoffen, Metallen und Gläsern, gering. Wird also eine Siliconelastomermasse auf ein Substrat aufgebracht und anschließend vernetzt, kann das entstandene Siliconelastomer in der Regel problemlos, also durch Anwendung geringer Zugkräfte, von der Substratoberfläche abgezogen werden. Häufig wird sogar eine spontane Ablösung des Siliconelastomers vom Substrat festgestellt. Die Haftung ist bei additionsvernetzenden Siliconelastomeren sogar noch weiter vermindert. Da in zahlreichen Anwendungen jedoch eine feste und dauerhafte Substrathaftung des Siliconelastomers von entscheidender Bedeutung ist, wurde eine Vielzahl spezieller Maßnahmen vorgeschlagen, um eine feste Verbindung zwischen Substrat und Siliconelastomer zu erzielen.

Grundsätzlich kann die Haftfestigkeit des Siliconelastomer-Substrat-Verbundes erhöht werden, indem die chemische und/oder physikalische Beschaffenheit des Substrates bzw. der Substratoberfläche vor dem Aufbringen der additionsvernetzenden Siliconelastomerzusammensetzung in geeigneter Weise verändert wird. Dies kann beispielsweise erfolgen durch Vorbehandlung der Substratoberfläche mit haftvermittelnden Additiven (sogenannten Primern), durch Plasmabehandlung der Substratoberfläche etc. Diese Maßnahmen haben u.a. den Nachteil, dass zusätzliche Verfahrensschritte erforderlich werden oder spezielle Anforderungen an die Beschaffenheit des Substrates gestellt werden müssen.

Des Weiteren kann die Haftfestigkeit des Siliconelastomer-Substrat-Verbundes erhöht werden, indem die chemische und/oder physikalische Beschaffenheit der Siliconelastomermasse gezielt verändert wird. Bekannt sind zahlreiche haftvermittelnde Additive, welche - der unvernetzten Siliconmasse beigemischt - eine Selbsthaftung des resultierenden Siliconelastomers auf diversen Substraten herbeiführen. Hierzu zählen Verbindungen, die hochreaktive funktionelle Gruppen, wie Alkoxy, Epoxy, Carboxy, Amino etc., enthalten, wobei diese Gruppen zumeist so ausgewählt werden, dass der Haftvermittler sowohl mit dem Substrat als auch mit einem Siliconelastomerbestandteil zu reagieren vermag. Zwar kann durch derartige Haftvermittler auf eine Vorbehandlung des Substrates evtl. verzichtet werden, doch entspricht die erzielte Haftfestigkeit häufig nicht den gestellten Anforderungen. Auch ist eine Steigerung der Haftfestigkeit durch höhere Gehalte an diesen Haftvermittlern nur bedingt möglich, da sich die in ihm enthaltenen hochreaktiven Gruppen dann zunehmend nachteilig auf die Gebrauchseigenschaften, wie Lagerstabilität, Vernetzungscharakteristik (Inhibierung), toxikologische Unbedenklichkeit etc., auswirken; man ist aus diesen Gründen vielmehr daran interessiert, den Gehalt an Haftvermittlern so niedrig wie möglich zu halten.

EP 0 686 671 A2 beschreibt eine selbsthaftende additionsvernetzende Masse, die ohne speziellen Haftvermittler auskommt, da der haftvermittelnde Bestandteil entweder ein Organohydrogenpolysiloxan ist, welches durchschnittlich pro Molekül mindestens zwei SiH-Gruppen besitzt und dessen monovalente Si-gebundene Reste zu mindestens 12 Mol.-% aus Kohlenwasserstoffresten mit einem aromatischen Ring bestehen, oder eine solche Verbindung ist, die durchschnittlich pro Molekül mindestens eine SiH-Gruppe besitzt und die eine Gruppe bestehend aus zwei aromatischen Ringen enthält, wobei die beiden aromatischen Ringe durch -R¹³R¹⁴Si-, -R¹³R¹⁴SiO-, -OR¹³R¹⁴SiO- oder -R¹³R¹⁴SiOR¹³R¹⁴Si- voneinander getrennt sind und die Reste R¹³ und R¹⁴ einwertige Kohlenwasserstoffreste darstellen. Der haftvermittelnde Bestandteil kann also zugleich der Vernetzer der Siliconelastomermasse sein. Mit dieser Zusammensetzung wird eine gute Haftung auf organischen Kunststoffen (vor allem ABS) erzielt, während gleichzeitig auf eine leichte Entformbarkeit aus der metallenen Vulkanisationsform (Chrom- oder Nickel-beschichtete Stahlform bzw. Form aus einer Aluminiumlegierung) hingewiesen wird. Der hohe Gehalt an aromatische Ringe enthaltenden Resten in dem SiH-haltigen, haftvermittelnden Bestandteil von > 12 Mol.-% bedingt jedoch eine erhebliche Unverträglichkeit mit den übrigen Bestandteilen der additionsvernetzenden Siliconelastomermasse. Dies führt einerseits zu einer teilweisen Entmischung (Ausschwitzen) während der Lagerung, was ein wiederholtes Homogenisieren der diesen Bestandteil enthaltenden Komponente vor Gebrauch erforderlich macht. Diese Unverträglichkeit, die sich bereits an einer milchigen Trübung der unvernetzten Masse zeigt, manifestiert sich auch in einer deutlich verminderten Transparenz der daraus hergestellten Siliconelastomerteile. Fungiert der haftvermittelnde Bestandteil zugleich als Vernetzer der Siliconelastomerzusammensetzung, führt die Unverträglichkeit zu Vulkanisationsstörungen, die zu inhomogener Netzwerkbildung und mangelhaften mechanischen Vulkanisateigenschaften führen. Um diese Vulkanisationsstörungen zu umgehen, muss zusätzlich zum haftvermittelnden SiH-haltigen Bestandteil ein mit der Siliconelastomermasse vollständig verträglicher SiHhaltiger Vernetzer eingesetzt werden, was allerdings andere Nachteile (z.B. erhöhte Werte des Druckverformungsrestes; erhöhte Ausschwitztendenz des haftvermittelnden Bestandteils) zur Folge hat. Der hohe Gehalt an aromatische Ringe enthaltenden Resten in dem SiH-haltigen, haftvermittelnden Bestandteil von > 12 Mol.-% verursacht auch eine erhebliche Strukturviskosität und Thixotropie der Siliconelastomermasse, die in zahlreichen Anwendungen (z.B. Spritzguss von Flüssigsiliconkautschuk) unerwünscht ist. Schließlich ist auch die Haftung dieser Zusammensetzung auf Metallen unzureichend.

EP 0 875 536 A2 beschreibt eine selbsthaftende additionsvernetzende Siliconkautschukmischung, die sich dadurch auszeichnet, dass
a) der SiH-Vernetzer mindestens 20 SiH-Gruppen enthält (übrige Reste sind aliphatisch gesättigt),
b) ein epoxyfunktionelles Alkoxysilan und/oder Alkoxysiloxan enthalten ist,
c) optional ein Peroxid.

Besonders bevorzugt ist dabei die Verwendung des Glycidyloxypropyltrimethoxysilans (Glymo). Die in EP 0 875 536 A2 beschriebene Siliconkautschukmischung eignet sich besonders zur Herstellung von Verbundformteilen, die aus dem Siliconelastomer und einem organischen Kunststoff bestehen. Die in EP 0 875 536 A2 beschriebene Zusammensetzung weist jedoch den Nachteil auf, dass nur bei Verwendung sehr SiH-reicher Vernetzer, mit durchschnittlich mindestens 20 SiH-Gruppen pro Molekül, eine ausreichende Haftfestigkeit erzielt werden kann. In den dortigen Beispielen werden Vernetzer mit 30 SiH-Gruppen je Molekül verwendet. Die Verwendung derart hochfunktioneller Vernetzer vermindert die Lagerstabilität additionsvernetzender Siliconkautschukmischungen erheblich, d.h., die Fließfähigkeit wird massiv beeinträchtigt, was bis zur Verstrammung der Masse führen kann, wodurch eine ordnungsgemäße Verarbeitung der Masse, z.B. im Spritzguss, nicht mehr möglich ist. Zudem müssen, um eine hohe Haftfestigkeit zu erzielen, relativ hohe Mengen an epoxyfunktionellem Alkoxysilan/-siloxan eingesetzt werden, wodurch die Vernetzungsgeschwindigkeit erheblich vermindert wird. Zwar kann dies teilweise durch Verwendung eines Peroxids, wie in EP 0 875 536 A2 beschrieben, kompensiert werden, doch kommen hierfür wegen der notwendigerweise niedrigen Vernetzungstemperatur (Erweichung des organischen Kunststoffes) nur Peroxide mit niedriger Anspringtemperatur, wie das beschriebene 2,4-Dichlorbenzoylperoxid, in Frage, die zum einen wegen der freigesetzten Spalt- und Folgeprodukte toxikologisch sehr bedenklich sind (PCB-Problematik), zum anderen die Lagerstabilität der Masse weiter verschlechtern.

Keine der herkömmlichen peroxidisch oder additionsvernetzenden Siliconelastomerzusammensetzungen wird also in befriedigender Weise den Anforderungen gerecht, die an eine selbsthaftende Siliconelastomermasse, welche z.B. zur Herstellung von Verbundformteilen oder zum Verguss elektrischer/elektronischer Teile Verwendung finden soll, gestellt werden:
a) gute Fließfähigkeit und Lagerstabilität
b) hohe Vernetzungsgeschwindigkeit bei relativ niedrigen Temperaturen
c) hohe Haftfestigkeit auf organischen Kunststoffen, Metallen und Gläsern
d) leichte Entformbarkeit aus Vulkanisationsformen
e) toxikologische Unbedenklichkeit
f) hohes Niveau der Gebrauchseigenschaften (Transparenz, Nichtkorrosivität, mechanisches Eigenschaftsprofil).
   EP 1 106 662 B1 beschreibt additionsvernetzende Siliconelastomere, die die oben genannten Nachteile zum großen Teil durch Verwendung geeigneter Vernetzermoleküle nicht mehr aufweisen. Allerdings sind sämtliche in EP 1 106 662 B1 und im weiter oben genannten Stand der Technik angeführten Siliconzusammensetzungen zum Aufbau der Haftung auf dem Substrat und gleichzeitiger fehlerfreier Vulkanisation auf das Vorhandensein von Druck (Forminnendruck, Anpressdruck) angewiesen. Das bedeutet, es handelt sich um reine Moulding-, Spritzgussmassen oder allgemeiner ausgedrückt um Formartikelmassen.

Große Anwendungen im Verbundartikelbereich laufen aber nicht nur über den diskontinuierlichen Prozess von Mouldingverfahren, sondern über kontinuierliche Fertigungsprozesse, wie der Extrusion und dem verwandten Kalandrieren bzw. Beschichten. Diesen Prozessen ist gemein, dass die Vulkanisation in sehr kurzer Zeit drucklos ablaufen muss. Es bestehen somit erhöhte Anforderungen an Siliconzusammensetzungen, die für die kontinuierlichen Prozesse eingesetzt werden, wie
a) erhöhte Standfestigkeit (Viskosität)zum Halten der Geometrie im unvulkanisierten Zustand
b) schnelle Vulkanisation
c) maximal verminderte Blasenbildungstendenz
d) geringe Extrusionsquellung.
   Mit Ausnahme der Anforderung b) würden die Additive gemäß dem Stand der Technik sämtliche Eigenschaften negativ beeinflussen, und somit eine fehlerfreie kontinuierliche Teileherstellung von vorneherein unmöglich machen. Zudem hat sich gezeigt, dass - selbst wenn Blasenbildung, raue Oberflächen und Deformationen am extrudierten Teil in Kauf genommen werden- der Aufbau der Haftung unter den Bedingungen einer drucklosen kontinuierlichen Fertigung zu langsam stattfindet, und somit kein befriedigender Verbund stattfindet. Zudem schwächen Blasen an der Grenzfläche die Haftwirkung enorm. Die folgenden zusätzlichen Anforderungen an eine selbsthaftende extrudierbare oder kalandrierbare Masse werden also von im Stand der Technik beschriebenen Massen ungenügend oder gar nicht erfüllt:
e) sehr schneller Aufbau von Anfangshaftung
f) rascher Aufbau von Transporthaftung hoher Güte bzw. bevorzugt sofortiger Aufbau einer Haftkraft nahe oder gleich der Endhaftung
g) hoher absoluter Endhaftungswert ohne Nachbehandlung
h) keine Beeinflussung der mechanischen und chemischphysikalischen Eigenschaften der Masse durch Haftmodifizierung
i) keine Beeinflussung der verarbeitungsrelevanten Eigenschaften (Standfestigkeit, Extrusionsquellung, Blasenbildungstendenz)durch Haftmodifizierung.

Es bestand daher die Aufgabe, eine auf verschiedensten Substraten, wie beispielsweise organischen Kunststoffen, Fasern/Geweben, Metallen, Glas, Keramik, gut selbsthaftende peroxidisch oder additionsvernetzende Siliconelastomerzusammensetzung bereitzustellen, welche die Nachteile der im Stand der Technik beschriebenen Zusammensetzungen nicht aufweist bzw. dem voranstehenden Anforderungsprofil gerecht wird.

Gegenstand der Erfindung sind Siliconelastomerzusammensetzungen enthaltend,
(A) zumindest ein siloxanhaltiges Polymer, welches organische Reste aufweist, die zur Vernetzung geeignet sind,
(B) zumindest eine behandelte oder unbehandelte, pyrogene oder gefällte Kieselsäure,
(C) zumindest ein Silikat mit thermisch oder hydrolytisch spaltbaren Abgangsgruppen O-R², ausgewählt aus der Gruppe enthaltend Silikatsalze oder niedermolekulare Silikatverbindungen, wobei R² ein H, ein organischer Rest oder statt O-R² ein Halogen als Abgangsgruppe bedeutet,
(D) zumindest ein harzbildendes Monomer oder Oligomer mit linearer Struktur, mit der Maßgabe, dass Silikate nicht umfasst sind,
(E) zumindest ein geeignetes Vernetzungssystem ausgewählt aus der Gruppe enthaltend peroxidinduzierte Vernetzung oder Edelmetallkomplex-katalysierten Additionsvernetzung.

Bei den erfindungsgemäßen Zusammensetzungen kann es sich um Einkomponenten-Massen wie auch um Mehrkomponenten-Massen handeln. In letzterem Fall können die Komponenten der erfindungsgemäßen Zusammensetzungen alle Bestandteile in beliebiger Kombination enthalten.

Überraschenderweise hat sich gezeigt, dass die Anforderungen aller oben aufgezeigten Punkte a) bis i) durch die erfindungsgemäßen Zusammensetzungen erfüllt werden, welche nicht wie bisher über eine Kombination Polmymere/Oligomere und Additive bzw. Vernetzer an das Substrat binden, sondern über den Füllstoff (B).
Bevorzugt sind die zur Vernetzung geeigneten organischen Reste der Verbindung (A), aliphatische Kohlenstoff-Kohlenstoff-Mehrfachbindungen.

Vorzugsweise ist der Bestandteil (A) eine aliphatisch ungesättigte Organosiliciumverbindung, wobei alle bisher in vernetzenden Massen verwendeten, aliphatisch ungesättigten Organosiliciumverbindungen eingesetzt werden können, wie auch beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit Ether-Gruppen.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R₃SiO_{1/2}, R¹R₂SiO_{1/2}, R¹RSiO_{2/2} und R₂SiO_{2/2} zusammengesetzt, wobei R, R¹ beliebige organische oder anorganische Substituenten sein können, bevorzugt halogen- und/oder organosubstituierte lineare und verzweigte Siloxane mit 1 bis 10 Si-O-Einheiten, besonders bevorzugt organosubstituierte Siloxane mit durch Abgangsgruppen abgesättigten end- und seitständigen OH-Funktionen. Verzweigte und netzwerkartige Polysiloxane enthalten zusätzlich trifunktionelle und/oder tetrafunktionelle Einheiten, wobei solche der Formeln RSiO_{3/2}, R¹SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer Viskosität von 0,01 bis 500 000 Pa·s, besonders bevorzugt von 0,1 bis 100 000 Pa·s, jeweils bei 25°C.

Der Gehalt der erfindungsgemäßen vernetzbaren Masse an Komponente (A) liegt im Bereich von 40 bis 90 Gew.-%, vorzugsweise bei 55 bis 85 Gew.-%.

Als Füllstoffe (B) können alle Füllstoffe aus der Gruppe der Kieselsäuren eingesetzt werden, die auch bisher in siliconhaltigen Massen eingesetzt worden sind. Beispielsweise pyrogene oder gefällte Kieselsäuren mit BET-Oberflächen von mindestens 50 m²/g wobei pyrogene und gefällte Kieselsäuren mit BET-Oberflächen von mindestens 50 m²/g bevorzugt sind.

Die genannten Kieselsäurefüllstoffe (B) können hydrophilen Charakter haben oder nach bekannten Verfahren hydrophobiert sein. Beim Einmischen hydrophiler Füllstoffe ist die Zugabe eines Hydrophobierungsmittels erforderlich.

Besonders bevorzugt als Komponente (B) sind Kieselsäuren, die noch teilweise hydrophile Gruppen aufweisen, also nicht belegte OH-Gruppen oder mit Organosilylharzen substituierte OH-Gruppen enthalten und somit noch teilweise hydrophilen Charakter aufweisen bzw. durch Abspaltung von organischen Abgangsgruppen, beispielsweise -OMe, -OEt und -OAc *in situ* hydrophile Gruppen bilden können.

Der Gehalt der erfindungsgemäßen vernetzbaren Masse an aktiv verstärkendem Füllstoff (B) liegt im Bereich von 0,5 bis 70 Gew.-%, vorzugsweise bei 5 bis 50 Gew.-%.

Die erfindungsgemäß eingesetzten Komponenten (A) und (B) sind handelsübliche Produkte bzw. nach in der Chemie gängigen Verfahren herstellbar.

Silikate (C) können Silikatsalze oder lineare oder verzweigte niedermolekulare Silikatverbindungen sein, welche thermisch oder hydrolytisch spaltbare O-R²-Bindungen aufweisen, wobei R² die oben genannte Bedeutung hat.

Bevorzugt sind Silikate (C) der allgemeinen Formel (1),

R³R⁴SiR⁵R⁶, (1)

wobei R³, R⁴, R⁵, R⁶ ein organischer oder anorganischer Rest oder ein Substituent der Struktur -O-R⁷ oder Halogenrest sein kann, wobei R⁷ ein H oder ein beliebiger organischer Rest bedeutet. Besonders bevorzugt bedeuten die Reste R³, R⁴, R⁵, R⁶ eine vorgebildete kleine und leicht abspaltbare Abgangsgruppe, wie beispielsweise -OMe, -OEt, -OAc oder auch reaktive Halogene, wie -Cl, -Br.

In einer weiteren Ausführungsform kann mindestens einer der Reste R³, R⁴, R⁵ oder R⁶ durch ein -O- ersetzt sein und so zu einer niedermolekularen dreidimensionalen Fortführung der Silikat-Tetraederstruktur führen. Bevorzugt bestehen die niedermolekularen Silikatverbindungen aus bis zu 100 Si-O-Einheiten.

Der Gehalt der erfindungsgemäßen vernetzbaren Masse an Komponente (C) liegt im Bereich von 0,3 bis 30 Gew.-%, vorzugsweise bei 1 bis 10 Gew.-%.

Die erfindungsgemäß eingesetzten Ausgangsstoffe (C) sind dem Fachmann bekannt und können z. T. käuflich erworben werden.

Als Harzbildner (D) werden Monomere oder Oligomere mit linearer Struktur eingesetzt, mit der Maßgabe, dass Silikate nicht umfasst sind.

Bevorzugt sind als (D) alle Verbindungen der allgemeinen Formel (2)

R⁸R⁹(R¹⁰O)Si-OR¹¹ (2)

wobei R⁸, R⁹ beliebige organische oder anorganische Substituenten sein können, bevorzugt halogen- und/oder organosubstituierte lineare und verzweigte Siloxane mit 1 bis 10 Si-O-Einheiten, besonders bevorzugt organosubstituierte Siloxane mit durch Abgangsgruppen abgesättigten end- und seitständigen OH-Funktionen. R¹⁰ und R¹¹ können ebenfalls beliebige organische oder anorganische Verbindungen sein, jedoch mit der Maßgabe, dass mindestens einer von beiden eine vorgebildete Abgangsgruppe aufweist, beispielsweise einen Substituenten -CH₃, -CH₂CH₃, - C(O)CH₃ etc. aufweist. Bevorzugt als Rest R¹⁰, R¹¹ sind daher kurzkettige organische Verbindungen, besonders bevorzugt Methyl-, Ethyl-, oder Acetylgruppen.

Die erfindungsgemäß eingesetzten Ausgangsstoffe (D) sind dem Fachmann bekannt und können z. T. käuflich erworben werden.

Der Gehalt der erfindungsgemäßen vernetzbaren Masse an Komponente (D) liegt im Bereich von 0,1 bis 20 Gew.-%, vorzugsweise bei 0,5 bis 5 Gew.-%.

Als Vernetzersystem (E) können alle bisher im Stand der Technik bekannten peroxidinduzierten oder Edelmetallkomplexkatalysierte additionsvernetzenden Systeme verwendet werden.

Erfolgt die Vernetzung der erfindungsgemäßen Zusammensetzungen mittels freier Radikale, werden als Vernetzungsmittel organische Peroxide, die als Quelle für freie Radikale dienen, eingesetzt. Beispiele für organische Peroxide sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, Tert.-butylperoxy-isopropylcarbonat, Tert.-butylperoxyisononanoat, Dicyclohexylperoxydicarbonat und 2,5-Dimethylhexan-2,5-diperbenzoat.

Es kann eine Art von organischem Peroxid, es kann auch ein Gemisch von mindestens zwei verschiedenen Arten von organischen Peroxiden eingesetzt werden.

Als die Anlagerung von Si-gebundenem Wasserstoff an aliphatische Mehrfachbindung fördernde Katalysatoren können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. PtC14, H2PtC16*6H2O, Na2PtCl4*4H2O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungs-produkten aus H2PtCl6*6H2O und Cyclohexanon, Platin-Vinyl-siloxankomplexe, wie Platin-1,3-Divinyl-1,1,3,3-tetra-methyl- disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Außer den Komponenten (A) bis (E) können die erfindungsgemäßen Zusammensetzungen noch alle weiteren Stoffe enthalten, die auch bisher zur Herstellung von siliconhaltigen Massen eingesetzt wurden, einschließlich solcher Stoffe, die bisher zur Verbesserung der Haftung verwendet wurden.

Die erfindungsgemäßen siliconhaltigen Zusammensetzungen können wahlweise als Bestandteil (F) weitere Zusätze zu einem Anteil von bis zu 10 Gew.-%, vorzugsweise 0,0001 bis 4 Gew.-%, enthalten, welche als Katalysator, Cokatalysator oder Initiator für Spaltungs- und Kondensationsreaktionen von O-R-Bindungen wirken können, wie:
- Metall- oder Edelmetallkomplexe, bevorzugt tetraorganisch substituierte Komplexe, besonders bevorzugt tetraorganisch substituierte Zinn-, Titan- und Zirkoniumkomplexe;
- Saure oder basische ionische und nichtionische Verbindungen, wie Alkali- und Erdalkalisalze von organischen und anorganischen Säuren und Basen, bevorzugt Acetate, Sulfonate, Sulfate und Phosphate bzw. Ammoniumsalze;
- alle weiteren anorganischen und organischen Verbindungen, welche in der Lage sind, O-R-Bindungen zu destabilisieren, zu spalten oder deren Spaltung oder Destabilisierung zu katalysieren.

Die erfindungsgemäßen siliconhaltigen Zusammensetzungen können wahlweise als Bestandteil (G) weitere Zusätze zu einem Anteil von bis zu 70 Gew.-%, vorzugsweise 0,0001 bis 40 Gew.-%, enthalten. Diese Zusätze können z.B. inaktive Füllstoffe, harzartige Polyorganosiloxane, die von den Siloxanen (A),(C),(D) verschieden sind, Dispergierhilfsmittel, Lösungsmittel, Haftvermittler, Pigmente, Farbstoffe, Weichmacher, organische Polymere, Hitzestabilisatoren usw. sein. Hierzu zählen Zusätze, wie Quarzmehl, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststoffasern, Kunststoffpulver, Metallstäube, Farbstoffe, Pigmente usw.

Enthalten sein können des Weiteren Zusätze (H), die der gezielten Einstellung der Verarbeitungszeit, Anspringtemperatur und Vernetzungsgeschwindigkeit der erfindungsgemäßen Zusammensetzungen dienen.

Die erfindungsgemäßen Organopolysiloxanmassen können, falls erforderlich, in Flüssigkeiten gelöst, dispergiert, suspendiert oder emulgiert werden. Die erfindungsgemäßen Zusammensetzungen können - insbesondere je nach Viskosität der Bestandteile sowie Füllstoffgehalt - niedrigviskos und gießbar sein, eine pastöse Konsistenz aufweisen, pulverförmig sein oder auch geschmeidige, hochviskose Massen darstellen, wie dies bekanntermaßen bei den in Fachkreisen häufig als RTV-1, RTV-2, LSR und HTV bezeichneten Massen der Fall sein kann. Hinsichtlich der elastomeren Eigenschaften der vernetzten erfindungsgemäßen Siliconmassen wird gleichfalls das gesamte Spektrum umfasst, beginnend bei extrem weichen Silicongelen, über gummiartige Materialien bis hin zu hochvernetzten Siliconen mit glasartigem Verhalten.

Das Verfahren zur Herstellung von Verbundformteilen aus den erfindungsgemäßen Siliconelastomerzusammensetzung kann beispielsweise durch Coextrusion, Kalandrieren und Überformen, mit und ohne Druckeinwirkung erfolgen.

Besonders bevorzugt sind Massen, welche die Verarbeitung in den Verfahren der Extrusion, des Kalandrierens und der Beschichtung erlauben, d.h., Massen, welche gemeinhin als Festsilicon bzw. HTV oder HCR bekannt sind bzw. für die Beschichtung auch Massen, welche unter RTV bzw. LSR bekannt sind.

Die Herstellung der erfindungsgemäßen siliconhaltigen Zusammensetzungen kann nach bekannten Verfahren erfolgen, wie beispielsweise durch gleichmäßige Vermischung der einzelnen Komponenten (A) bis (E) und optional den weiteren Komponenten (F) bis (H). Die Reihenfolge dabei ist beliebig. Die Vermischung erfolgt dabei abhängig von der Viskosität von (A) z.B. mit einem Rührer, in einem Disolver, auf einer Walze oder in einem Kneter. Der Füllstoff (B), das Silikat (C) und der Harzbildner (D) können auch in einem organischen Thermoplasten bzw. thermoplastischen Siliconharz verkapselt werden, mit der Maßgabe, dass an der Oberfläche des Partikels weiterhin Gruppen für Spaltungen von O-R-Bindungen zugänglich sind.

Bei den erfindungsgemäß eingesetzten Komponenten (A) bis (H) kann es sich jeweils um eine einzelne Art einer solchen Komponente, wie auch um ein Gemisch aus mindestens zwei verschiedenen Arten einer solchen Komponente handeln.

Die erfindungsgemäßen Zusammensetzungen können bei Vorhandensein vernetzbarer Gruppen vernetzt (vulkanisiert) werden, wie die bisher bekannten vernetzbaren Zusammensetzungen. Vorzugsweise handelt es sich dabei um Temperaturen von 40 bis 220°C, besonders bevorzugt von 100 bis 190°C, und drucklos oder unter einem Druck von 900 bis 1100 hPa. Es können aber auch höhere oder niedrigere Temperaturen und Drücke angewendet werden. Die Vernetzung kann auch photochemisch mit energiereicher Strahlung, wie z.B. sichtbares Licht mit kurzen Wellenlängen und UV-Licht, oder mit einer Kombination aus thermischer und photochemischer Anregung durchgeführt werden

Ein weiterer Gegenstand der vorliegenden Erfindung sind Extrudate und Formkörper hergestellt durch Vernetzung der erfindungsgemäßen Zusammensetzungen.

Die erfindungsgemäßen Zusammensetzungen sowie die erfindungsgemäß daraus hergestellten Vernetzungsprodukte können für alle Zwecke eingesetzt werden, mit dem Vorteil ökonomischer, weitestgehend automatisierter, kontinuierlicher und fehlerminimierter Verbundteilproduktion, für die auch bisher zu Elastomeren vernetzbare Organopolysiloxanzusammensetzungen bzw. Elastomere verwendet wurden. Dies umfasst beispielsweise die Siliconbeschichtung bzw. Imprägnierung beliebiger Substrate, die Herstellung von Formteilen, z.B. im Spritzgussverfahren, Vakuumextrusionsverfahren, Extrusionsverfahren, Formgießen und Formpressen, Abformungen, die Verwendung als Dicht- Einbett- und Vergusszusammensetzungen, Kleber usw. Besonders bevorzugt sind Extrudate, kalandrierte und beschichtete Ware, die durch einen primerlosen und nicht mechanisch (z.B. durch Hinterschnitte oder Durchbrüche) hervorgerufenen Verbund gekennzeichnet sind.

Die erfindungsgemäßen Zusammensetzungen haben den Vorteil, dass sie in einem einfachen Verfahren unter Verwendung leicht zugänglicher Ausgangsstoffe und damit wirtschaftlich hergestellt werden können.

Die erfindungsgemäßen Zusammensetzungen haben ebenfalls den Vorteil, dass sie sowohl edelmetallkatalysiert als auch peroxidinduziert vernetzt werden können, da die zum Aufbau der Haftung notwendigen Additive gegenüber Peroxiden weitgehend unempfindlich sind.

Die erfindungsgemäßen Zusammensetzungen haben des Weiteren den Vorteil, dass sie ohne Verwendung von Vorbehandlungen, Primerauftrag oder mechanischen Hilfsmitteln auf Substraten haften.

Die erfindungsgemäßen Zusammensetzungen haben des weiteren den Vorteil, dass diese Haftung sich sehr rasch aufbaut, typischerweise im Minutenbereich für die sogenannte Transporthaftung, die für ablösungsfreien Abzug aus dem Heizkanal bzw. zum Transport des Verbundteils notwendig ist.

Die erfindungsgemäßen Zusammensetzungen haben des Weiteren den Vorteil, dass diese Transporthaftung bereits sehr hoch liegt, teilweise im Bereich der Reißfestigkeit oder Bruchlast eines der Verbundpartner.

Die erfindungsgemäßen Zusammensetzungen haben des weiteren den Vorteil, dass die Haftung sich mit der Zeit meist durch Lagerung oder Temperung weiter verstärkt.

Die erfindungsgemäßen Zusammensetzungen haben des weiteren den Vorteil, dass die Haftung sich mit dem Altern des Materials nicht abbaut, d.h., dass keine dem Material vorauseilende Alterung des Verbunds auftritt.

Die erfindungsgemäßen Zusammensetzungen haben des weiteren den Vorteil, dass die Haftung sich drucklos aufbaut, d.h., dass ein Verbund ohne Anpressen oder weitere aufwändige Prozessschritte zustande kommt.

Die erfindungsgemäßen Zusammensetzungen haben des weiteren den Vorteil, dass die vernetzten Zusammensetzungen am Elastomer-Endprodukt auch bei hohen Anteilen an Komponenten (C), (D) und (F) keine wesentliche Verschlechterung von mechanischen oder anderen physikalischen Eigenschaften im Vergleich zu nicht selbsthaftend eingestellten Zusammensetzungen zeigen. Dies ist durch die morphologische Ähnlichkeit der Additive mit der Siliconbasis (A) und (B) zu erklären, welche nicht zu negativen Seiten- oder Entmischungseffekten führt.

Die erfindungsgemäßen Zusammensetzungen haben des weiteren den Vorteil, dass ihre vernetzten Vulkanisate bei geeigneter Wahl der Additive im direkten Kontakt mit Lebensmitteln verwendet werden können, so dass keine aufwändigen zusätzlichen Beschichtungen oder Träger verwendet werden müssen, um direkten Kontakt zu vermeiden, und so dass die Zusammensetzungen selbst als lebensmittelzugelassene Beschichtungen nicht lebensmittelgeeigneter Substrate dienen können.

In den nachstehend beschriebenen Beispielen beziehen sich alle Angaben von Teilen und Prozentsätzen, falls nicht anders angegeben, auf das Gewicht. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Beispiele

### Substrate

Die Haftung der erfindungsgemäßen Siliconelastomere wurde auf folgenden Substraten getestet:
a) Polyamid (PA): Ultramid® A3EG6 (BASF AG)
b) Aluminium (Industriequalität; nicht grundiert, nicht eloxiert)
c) Stahl: V2A-Stahl (Industriequalität)
d) Kupfer (Industriequalität)

### Beispiel 1: Herstellung einer erfindungsgemäßen Masse und Simulation der Haftung bei Coextrusion

1000 Gramm eines Poly(dimethyl-methylvinyl)siloxans mit einer mittels ²⁹Si-NMR bestimmten mittleren Kettenlänge 800 Si-O-Einheiten (Wacker Chemie AG) werden vorgelegt und portionsweise mit 240 Gramm einer hydrophilen Kieselsäure mit einer BET-Oberfläche von ca. 300 m²/g (Wacker Chemie AG, München) in einem Sigma-Kneter bei 120°C homogen vermischt. Nach Abkühlen auf RT werden 50 Gramm eines 3:1:1-Gemisches aus Tetraethylsilikat, Methyltriethoxysilan und Dimethyldiethoxysilan (alle Wacker Chemie AG, München) gelöst in 100 ml Ethanol zugegeben und unter Vakuum bei 40°C weiter geknetet, bis das Ethanol restlos verdampft ist. Die entstandene Formulierung wird nun auf der Walze bei RT mit Vernetzungsadditiven, wie in Tabelle 2 angegeben, zur Vulkanisation versehen und auf die unten beschrieben Probekörper als Streifen aufgebracht und wie unten beschrieben vulkanisiert und die Probekörper getestet. Die Trennkräfte sind in Tabelle 1 angegeben. Die Masse weist eine mittlere Shore-A-Endhärte von 70 auf und vulkanisiert drucklos blasenfrei.

### Charakterisierung der Haftung eines die Coextrusion simulierenden Probekörpers (hergestellt gem. Beispiel 1)

Zur Charakterisierung der Haftfestigkeit werden 100,0 g der in den folgenden Beispielen hergestellten Elastomermasse als ca. 6 mm dicke Schicht auf die zuvor mit Aceton gereinigte Oberfläche des Substrates (Prüfkörpergröße ca. 20x60 mm, an beiden Enden jeweils ca. 10 mm abgeklebt, um an dieser Stelle eine Verbundbildung zu unterdrücken) je nach Viskosität mit einem Rakel aufgebracht oder als vorgeformter Streifen aufgelegt. Der entstandene Verbundkörper wird nun bei einer Temperatur von 200°C während 5 min in einem Umluft-Trockenschrank vulkanisiert, wobei eine vollständige Vernetzung der Elastomermasse erfolgt; anschließend wird auf Raumtemperatur abgekühlt. Mittels einer Zugdehnungsmaschine wird dann die maximale Kraft gemessen, die im Schälversuch notwendig ist, um Elastomer- und Substratkörper vollständig voneinander zu trennen, d.h., den Haftverbund aufzulösen. Die Bestimmung der Trennkraft erfolgt gemäß DIN 53531 und wird in N/mm angegeben. Je Beispiel werden 5 Prüfkörper gemessen, die Abrissspannung als Mittelwert bestimmt und der Anteil an kohäsivem Versagen in Prozent ermittelt. Kohäsives Versagen von 0% bedeutet, dass das Siliconelastomer vollständig und rückstandsfrei von der Substratoberfläche abgelöst wurde. Kohäsives Versagen von 100% (Idealfall) bedeutet, dass die Trennung ausschließlich durch Risswachstum innerhalb des Siliconelastomers oder des Substrats erfolgte.

### Beispiel 2: Haftung bei der Coextrusion auf Metallstreifen

10 kg selbsthaftend eingestellte Siliconmasse, hergestellt gemäß Beispiel 1, werden in einen industrieüblichen Extruder zugeführt und als ca. 10 mm breites, ca. 6 mm dickes Rechteckprofil auf ein im Abstand von jeweils 4 cm auf 2 cm abgeklebtes Metallband von ca. 0,05 mm Dicke extrudiert. Der so entstandene Rohverbund wird in einem 6-Meter-Heissluftkanal bei einer effektiven Temperatur von 230°C vulkanisiert bei einer Verweilzeit von 3 Minuten. Nach Abkühlen des Endverbundes wird dieser jeweils in der Mitte der abgeklebten Bereiche zerschnitten und die so entstandenen Prüflinge wie unter Beispiel 1 an der Prüfmaschine gerissen. Die Ergebnisse sind in Tabelle 1 angegeben.

### Beispiel 3: Herstellung einer erfindungsgemäßen Masse mit niedriger Shore-A-Härte

1000 Gramm eines Poly(dimethyl-methylvinyl)siloxans mit einer mittels ²⁹Si-NMR bestimmten mittleren Kettenlänge 800 Si-O-Einheiten (Wacker Chemie AG) werden vorgelegt und portionsweise mit 200 Gramm einer hydrophilen Kieselsäure mit einer BET-Oberfläche von ca. 300 m²/g (Wacker Chemie AG) in einem Sigma-Kneter bei 120°C homogen vermischt. Nach Abkühlen auf RT werden nacheinander 5 Gramm Tetraethylsilikat und 5 Gramm Methyltriethoxysilan (alle Wacker Chemie AG) zugegeben und bei hoher Schergeschwindigkeit bei 70°C für eine Stunde weiter geknetet. Die entstandene Formulierung wird nun auf der Walze bei RT mit 0,02 Gramm Butyltitanat (Merck KgAA) und 1 Gramm Glycidyloxypropyltrimethoxysilan (Degussa AG) sowie Vernetzungsadditiven, wie in Tabelle 2 angegeben, zur Vulkanisation versehen und wie oben beschrieben vulkanisiert. Die Masse weist eine mittlere Shore-A-Endhärte von 45 auf und vulkanisiert drucklos blasenfrei.

**Tabelle 1: (Trennkraft in [N/mm]; Anteil kohäsives Versagen in [%]); verwendete erfindungsgemäße Zusammensetzungen gem. Beispiel 1 und 3, platinkatalysiert additionsvernetzt**

| Beispiel | PA | | Aluminium | | V2A-Stahl | | Kupfer | |
|---|---|---|---|---|---|---|---|---|
| | [N/mm] | [%] | [N/m ] | [%] | [N/mm] | [%] | [N/mm] | [%] |
| Coextrusion simul. mit Masse aus Beisp. 1 | 11,2 | 100 | 13,8 | 100 | 13,0 | 100 | 8,9 | 80 |
| Coextrusion simul. mit Masse aus Beisp. 3 | 14,2 | 100 | 14,8 | 100 | 12,8 | 100 | 11,7 | 90 |
| Realcoextrusion gem. 2 mit Masse aus Beisp. 1 | - | - | 11,6 | 100 | 8,7 | 90 | 6,5 | 80 |
| Realcoextrusion gem. 2 mit Masse aus Beisp. 3 | - | - | 10,5 | 90 | 7,8 | 80 | 5,8 | 70 |

Die in Tabelle 1 angegebenen Werte belegen die hohe Haftfestigkeit von Coextrudaten, bestehend aus dem erfindungsgemäßen additionsvernetzten Siliconelastomer und organischen Kunststoffen bzw. Metallen. Besonders hervorzuheben ist, dass sowohl die simulierten Coextrudate als auch die Realcoextrudate bereits im frischen, d.h. noch warmen Zustand gemessen durchgehend ca. 80% der in den Tabellen angegebenen Endhaftung zeigen, also ausgezeichnete Transporthaftung, und nach Abkühlen umgehend die Endhaftung erreicht wird.

Typische mechanische Eigenschaften der erfindungsgemäßen Zusammensetzungen sind in Tabelle 2 angegeben, im Vergleich zu Standardsiliconen mit gleichem Vernetzungssystem. Für die in Tabelle 2 angegebenen Beispiele 1a bis 3bS wurde die Vernetzung wie weiter unten aufgezeigt durchgeführt, entweder durch Additionsvernetzung mittels Edelmetallkatalysator und einem H-Siloxan mit mindestens zwei S-H-Gruppen an einer Si-O-Hauptkette von mindestens 10 Si-O-Einheiten oder peroxidisch mit 2,4-Dichlorbenzoylperoxis.

### Beispiele

**1a** erfindungsgemäße Masse gemäß Beispiel 1, platinkatalysiert additionsvernetzt;
**1aS** Standardsiliconmasse, platinkatalysiert additionsvernetzt;
**1b** erfindungsgemäße Masse gemäß Beispiel 1, peroxidinduziert vernetzt;
**1bS** Standardsiliconmasse, peroxidinduziert vernetzt;
**3a** erfindungsgemäße Masse gemäß Beispiel 3, platinkatalysiert additionsvernetzt;
**3aS** Standardsiliconmasse, platinkatalysiert additionsvernetzt;
**3b** erfindungsgemäße Masse gemäß Beispiel 1, peroxidinduziert vernetzt;
**3bS** Standardsiliconmasse, peroxidinduziert vernetzt.

**Tabelle 2: Mechanisches Eigenschaftsprofil der selbsthaftenden Siliconzusammensetzungen im Vergleich mit nicht selbsthaftenden Siliconen**

| Beispiel | Shore A | Reißdehnung | Reißfestigkeit | Rückprallelastizität | Weiterreißwiderstand | Druckverformungsrest |
|---|---|---|---|---|---|---|
| | | [%] | [N/mm²] | [%] | [N/mm] | [%] |
| 1a | 68 | 680 | 10,3 | 55 | 34 | 30 |
| 1aS | 69 | 880 | 11,0 | 53 | 30 | 25 |
| 1b | 67 | 560 | 9,8 | 55 | 19 | 30 |
| 1bS | 67 | 600 | 10,0 | 55 | 17 | 28 |
| 3a | 45 | 780 | 11,0 | 58 | 32 | 24 |
| 3aS | 45 | 670 | 9,5 | 60 | 30 | 35 |
| 3b | 46 | 520 | 10,5 | 53 | 25 | 36 |
| 3bS | 45 | 500 | 11,0 | 52 | 26 | 35 |

Die Ergebnisse des mechanischen Vergleichs belegen, dass die zur Erzielung der Selbsthaftung in den erfindungsgemäßen Zusammensetzungen eingesetzten Additive die Mechanik innerhalb der Fehlergrenzen nicht negativ beeinflussen.

## Patentansprüche

1. Siliconelastomerzusammensetzung enthaltend
(A) zumindest ein siloxanhaltiges Polymer welches organische Reste aufweist, die zur Vernetzung geeignet sind,
(B) zumindest eine behandelte oder unbehandelte, pyrogene oder gefällte Kieselsäure,
(C) zumindest ein Silikat mit thermisch oder hydrolytisch spaltbaren Abgangsgruppen O-R², ausgewählt aus der Gruppe enthaltend Silikatsalze oder niedermolekulare Silikatverbildungen, wobei R² ein H, ein organischer Rest oder statt O-R² ein Halogen als Abgangsgruppe bedeutet,
(D) zumindest ein harzbildendes Monomer oder Oligomer mit linearer Struktur, mit der Maßgabe, dass Silikate nicht umfasst sind,
(E) zumindest ein geeignetes Vernetzungssystem ausgewählt aus der Gruppe enthaltend peroxidinduzierte Vernetzung oder Edelmetallkomplex-katalysierten Additionsvernetzung.

2. Siliconelastomerzusammensetzung nach Anspruch 1, **dadurch gekennzeichnet, dass** die zur Vernetzung geeigneten organischen Reste der Verbindung (A), aliphatische Kohlenstoff-Kohlenstoff-Mehrfachbindungen sind.

3. Siliconelastomerzusammensetzung nach Anspruch 1 oder 2, **dadurch gekennzeichnet, dass** die Kieselsäure (B) noch teilweise hydrophile Gruppen aufweist.

4. Siliconelastomerzusammensetzung nach einem der Ansprüche 1 bis 3, **dadurch gekennzeichnet, dass** das Silikat (C) der allgemeinen Fromel (1) entspricht,
R³R⁴SiR⁵R⁶, (1)
Wobei R³, R⁴, R⁵, R⁶ ein organischer oder anorganischer Rest oder ein Substituent der Struktur -O-R⁷ oder Halogenrest sein kann, wobei R⁷ ein H oder ein beliebiger organischer Rest bedeutet.

5. Siliconelastomerzusammensetzung nach einem der Ansprüche 1 bis 4, **dadurch gekennzeichnet, dass** das harzbildende Monomer oder Oligomer (D) der allgemeinen Formel (2) entspricht,
R⁸R⁹(R¹⁰O)Si-OR¹¹ (2)
wobei R⁸, R⁹ beliebige organische, anorganische Reste oder halogen- und/oder organosubstituierte lineare und verzweigte Silöxane mit 1 bis 10 Si-O-Einheiten,
R¹⁰ und R¹¹ eine beliebige organische oder anorganische Verbindung, mit der Maßgabe, dass mindestens einer von beiden eine vorgebildete Abgangsgruppe aufweist, bedeuten.

6. Verfahren zur Herstellung der Siliconelastomerzusammensetzung nach einem der Ansprüche 1 bis 5, **dadurch gekennzeichnet, dass** die Komponenten (A) bis (E) gleichmäßig miteinander vermischt werden.

7. Verfahren zur Herstellung von Verbundformteilen aus Siliconelastomerzusammensetzung, gemäß einem der Ansprüche 1 bis 5, durch Coextrusion, Kalandrieren und Überformen, mit und ohne Druckeinwirkung.

8. Extrudate und Formteile hergestellt durch Vernetzung der Siliconelastomerzusammensetzung gemäß einem der Ansprüche 1 bis 5.

## Claims

1. Silicone elastomer composition comprising
(A) at least one siloxane containing polymer having organic radicals capable of crosslinking,
(B) at least one treated or untreated, fumed or precipitated silica,
(C) at least one silicate having thermally or hydrolytically cleavable leaving groups O-R², selected from the group containing silicate salts or low molecular weight silicate compounds, where R² is an H, an organic radical or, instead of O-R², a halogen as leaving group,
(D) at least one resin forming monomer or oligomer with a linear structure, with the proviso that silicates are not included,
(E) at least one suitable crosslinking system selected from the group containing peroxide-induced crosslinking or noble metal complex catalyzed addition crosslinking.

2. Silicone elastomer composition according to claim 1, **characterized in that** the crosslinking capable organic radicals of the compound (A) are aliphatic carbon-carbon multiple bonds.

3. Silicone elastomer composition according to claim 1 or 2, **characterized in that** the silica (B) still contains some hydrophilic groups.

4. Silicone elastomer composition according to any one of claims 1 to 3, **characterized in that** the silicate (C) is of the general formula (1),
R³R⁴SiR⁵R⁶, (1)
where R³, R⁴, R⁵, and R⁶ can be an organic or inorganic radical or a substituent of the structure -O-R⁷ or halogen radical, where R⁷ is an H or any desired organic radical.

5. Silicone elastomer composition according to any one of claims 1 to 4, **characterized in that** the resin forming monomer or oligomer (D) is of the general formula (2),
R⁸R⁹ (R¹⁰O) Si-OR¹¹ (2)
where R⁸ and R⁹ are any desired organic, inorganic radicals or halogen substituted and/or organically substituted linear and branched siloxanes having 1 to 10 Si-O units,
R¹⁰ and R¹¹ are any desired organic or inorganic compound, with the proviso that at least one of the two contains a preformed leaving group.

6. Process for producing the silicone elastomer composition according to any one of claims 1 to 5, **characterized in that** components (A) to (E) are uniformly mixed with one another.

7. Process for producing composite moldings from a silicone elastomer composition according to any one of claims 1 to 5, by coextrusion, calendering, and overmolding, with or without pressurization.

8. Extrudates and moldings produced by crosslinking the silicone elastomer composition according to any one of claims 1 to 5.

## Revendications

1. Composition d'élastomère silicone contenant
(A) au moins un polymère contenant un silicone, qui comporte des radicaux organiques qui sont appropriés à la réticulation,
(B) au moins un acide silicique pyrogéné ou précipité, traité ou non traité,
(C) au moins un silicate comportant des groupes partants O-R² séparables thermiquement ou par hydrolyse, choisi dans l'ensemble contenant des sels silicate ou des composés silicate de faible masse moléculaire, R² représentant un atome d'hydrogène, un radical organique ou, au lieu de O-R², un atome d'halogène en tant que groupe partant,
(D) au moins un monomère ou oligomère générateur de résine, à structure linéaire, étant entendu que les silicates ne sont pas compris,
(E) au moins un système de réticulation approprié, choisi dans l'ensemble contenant la réticulation induite par peroxyde ou la réticulation par addition catalysée par un complexe de métal noble.

2. Composition d'élastomère silicone selon la revendication 1, **caractérisée en ce que** les radicaux organiques du composé (A), appropriés à la réticulation, sont des liaisons multiples aliphatiques carbone-carbone.

3. Composition d'élastomère silicone selon la revendication 1 ou 2, **caractérisée en ce que** l'acide silicique (B) comporte encore en partie des groupes hydrophiles.

4. Composition d'élastomère silicone selon l'une quelconque des revendications 1 à 3, **caractérisée en ce que** le silicate (C) correspond à la formule générale (1)
R³R⁴SiR⁵R⁶, (1)
dans laquelle R³, R⁴, R⁵, R⁶ peuvent être un radical organique ou inorganique ou un substituant de structure -O-R⁷ ou un atome d'halogène, R⁷ représentant un atome d'hydrogène ou un radical organique quelconque.

5. Composition d'élastomère silicone selon l'une quelconque des revendications 1 à 4, **caractérisée en ce que** le monomère ou oligomère (D) générateur de résine correspond à la formule générale (2),
R⁸R⁹ (R¹⁰O) Si-OR¹¹ (2)
dans laquelle R⁸ R⁹ représentent des radicaux organiques ou inorganiques quelconques ou des siloxanes linéaires ou ramifiés, comportant de 1 à 10 motifs Si-I, substitués par des groupes organiques et/ou des atomes d'halogène,
R¹⁰ et R¹¹ représentent un composé organique ou inorganique quelconque, étant entendu qu'au moins l'un des deux comporte un groupe séparable préformé.

6. Procédé pour la préparation des compositions d'élastomères silicone selon l'une quelconque des revendications 1 à 5, **caractérisée en ce qu'**on mélange les uns avec les autres de façon homogène les composants (A) à (E).

7. Procédé pour la production de pièces moulées composites à base d'une composition d'élastomère silicone, selon l'une quelconque des revendications 1 à 5, par coextrusion, calandrage et surmoulage, avec ou sans effet de pression.

8. Extrudats et pièces moulées produits par réticulation de la composition d'élastomère silicone selon l'une quelconque des revendications 1 à 5.
